# EUROPEAN PATENT SPECIFICATION

(11) **EP 0 942 821 B1**
(45) Date of publication and mention of the grant of the patent: **23.07.2003**
(21) Application number: 97913820.3
(22) Date of filing: 29.10.1997
(51) Int. Cl.: B29C 45/64, B29C 45/67

(54) **HIGH SPEED LOCKING CLAMP**
KLEMME ZUR SCHNELLEN VERRIEGELUNG
DISPOSITIF DE SERRAGE RAPIDE

(30) Priority: 06.11.1996 US 743719
(43) Date of publication of application: 22.09.1999
(73) Proprietor: HUSKY INJECTION MOLDING SYSTEMS LTD., Bolton Ontario L7E 5S5 (CA)
(72) Inventor: SCHAD, Robert, D., Toronto, Ontario M6G 2V5 (CA)
(74) Representative: Dearling, Bruce Clive
(86) International application number: US9719507
(87) International publication number: WO98019850

(56) References cited:
- GB-A- 1 601 419
- US-A- 5 133 655
- US-A- 5 194 267
- US-A- 5 302 109
- US-A- 5 620 723
- PATENT ABSTRACTS OF JAPAN vol. 015, no. 354 (M-1155), 6 September 1991 (1991-09-06) & JP 03 140212 A (JAPAN STEEL WORKS LTD:THE), 14 June 1991 (1991-06-14)

## Description

### BACKGROUND OF THE INVENTION

The present invention relates to a securing/clamping system for use with platens of a molding machine, especially an injection molding machine.

The prior art includes many injection molding machines which use tie bar clamping units for positioning a platen for the application of clamp-up forces. Control systems using hydraulic fluid, pressurized air and electric motors in combination with numerous switches and typically a controller unit are used to control both the positioning of the platens and the application and removal of clamp-up force for acquiring mold clamp-up and mold break.

Japanese Patent 61261-017 discloses a clamping mechanism for injection molding machines. The purpose of the control system therein is to maintain a parallel parting line between the molds by sensing the distance traveled by each clamping cylinder of each tie bar and maintaining the distances substantially equal. Accordingly, parallelism of the parting line between the molds can be maintained when the injection pressure of molten resin is uneven within the mold.

U.S. Patent 4,832,884 to Speck et al. discloses a method for measuring and controlling the closing force of a plastic injection molding machine. Accordingly, for an injection molding machine, a closing force is measured for a predetermined number of operation cycles. A mean value is calculated from the measurements and if the mean value is within a predetermined tolerance, no control intervention takes place. However, if the mean value is outside the tolerance but within a zone limited by alarm units, control intervention takes place by stepwise changing the installed height of the mold until the actual value measured for closing force after each operating cycle is within the tolerance given. In this method and system, a toggle joint system serves to generate the closing force on the first and second mold parts. In this case, the force is measured and if the force is within a tolerance zone, the spacing between the first and second mold parts is altered to less than or no increase relative the old force.

U.S. Patent 4,966,738 to Inaba et al. discloses a method for mold clamping force adjustment. Accordingly, in this method, a mold touch position is detected, at which the mold halves of a mold contact each other. The mold temperature is detected by means of thermocouples attached to the mold halves. The mold thickness is obtained based on the position where a movable platen and a stationary platen of the injection molding machine contact each other. After a molding operation is started, the mold temperature is detected and the amount of change in mold thickness during a period between a preceding cycle and a current cycle is calculated based on the change of mold temperature, the mold thickness, and the thermal expansion coefficient of the mold. A mold touch position for a current cycle is obtained based on the calculated value. Accordingly, when the mold is clamped in the current cycle, the movable platen is moved from the mold touch position toward the stationary platen by a predetermined amount to produce a predetermined mold clamping force. For this method, the measurements and adjustments are directed primarily to the mold position and not to the position of the clamping units. A clamping unit is a singular one which functions to force the movable platen against the stationary platen. That is, no tie bar clamping units are used internal to any of the platens for producing the clamp-up force.

U.S. Patent 5,147,661 to Kurumaji et al. discloses a mold aligning device for a compression molding machine. The mold aligning device includes a plurality of mold position adjusting cylinder actuators disposed on a bed wherein position detectors are associated with the mold positioning adjusting cylinder actuators to detect the strokes thereof. The hydraulic source for driving the mold position adjusting cylinder actuators and control unit for controlling the strokes of the piston rods of the actuators with reference to zero points of the piston rods of the actuators, is determined beforehand. The zero points are decided by placing the upper mold in close contact with the lower mold and extending the piston rods of the actuators so that the piston rods are pressed against the lower surface of a slide block. The strokes of the piston rods are controlled during a compression-molding operation so that the upper mold is maintained precisely in parallel with the lower mold. This device is directed to pressure molding. The cylinder actuators are not positioned within a movable molten platen, and the actuators do not clamp onto tie bars. The main purpose of the machine is to maintain parallelism between the upper and lower molds by the actuators placing direct pressure on the upper mold supporting surface for maintaining the same parallel to the lower mold.

U.S. Patent 5,338,171 to Hayakawa et al. discloses a die-clamping apparatus with an aligning device. The apparatus includes a stationary die plate for holding a stationary die, a movable die plate for holding a movable die, a hydraulic cylinder for moving the movable die plate forwardly and rearwardly with respect to the stationary die plate, and a tie bar for clamping by a fastening device located in the movable die plate. One or more alignment devices are provided so as to join the movable die and the stationary die in such a manner that primary alignment can be performed. The molding apparatus can be provided with a guide pin for secondarily aligning the movable die with respect to the stationary die when the stationary die and the movable die have been placed at predetermined positions. Four die clamping cylinders are provided at the corners of the stationary die plate so as to apply a clamping force to the stationary and movable dies after the fastening device has fastened to the tie bar. For this device, the tie bar fastener and clamping units, while being located on the tie bars, one adjacent the movable platen and one adjacent the stationary platen, are separate devices adding to the complexity of the machine.

U.S. Patent 5,370,518 to Sasaki et al. discloses an apparatus for injection and compression molding. The apparatus includes and injection device and a compression molding device wherein the compression molding device includes a stationary die plate for holding a stationary die, a movable die plate for holding a movable die, means for rapidly extending and retracting the movable die plate relative to the stationary die plate and means for locking the movable die plate to the tie bars at a position where the movable die plate approaches the stationary die plate. Means for fastening the dies after the movable die plate is locked to the tie bars is also provided. An injection device for feeding a molten plastic material into a mold cavity between the stationary die and the movable die initiates feeding of the molten plastic material into the mold cavity when the stationary die and movable die are parted from each other by a predetermined distance. The plastic material is compressed and drawn while the movable die is moved towards the stationary die after a predetermined quantity of molten plastic material has been fed into the mold cavity. The apparatus includes a device in a movable die plate for clamping onto the tie bars. However, the device does not include a combined means for providing the clamping force between the platens and fastening to the tie bars, as the clamp force is provided by separate die fastening cylinders which are positioned on the tie bars but separate from the fasteners.

U.S. Patent 5,133,655 to Schad et al. shows a clamp mechanism for an injection molding machine in which four columns attached to the moving platen are individually gripped by fluid actuated cylinders which also act as clamp force pistons. While this design is effective, it requires very close tolerances to be maintained between the columns and the inner bores of the cylinders since the amount of deflection of the cylinder walls to achieve sufficient gripping on the columns is small. Thus, manufacturing this clamp is expensive and in operation maintaining these small clearances imposes costly maintenance, procedures.

U.S. Patents 5 624 695, 5 645 875 and 5 620 723 to Glaesener show a novel lock nut arrangement for engaging the tiebars of a two platen injection molding machine clamp, for example. The locking nuts also act as clamp force pistons acting on the tiebars to clamp the mold between the platens.

GB-A-1601419 described a mold closing and locking arrangement for injection molding machines in which a clamping force is developed by the co-operation of closing pistons with rotatable tie-bar columns, and in which system the movable platen is initially closed to the stationary platen by means of a transverse cylinder. US patent 5302109 also describes a clamping mechanism for an injection molding machine, although this system employs a piston-operated brake pad to cause locking engagement of a brake housing to a column.

US patent 5194267 describes a vertical tire vulcanizing press having a tie-rod locking system employing a rotatable lock ring.

It is an object of the present invention to provide a fast-acting, energy efficient injection molding machine clamp assembly.

It is a still further object of the present invention to provide an injection molding machine clamp assembly with a low construction cost, low maintenance and good reliability.

It is still a further object of the present invention to provide an injection molding machine clamp assembly which occupies less floor space than conventional design.

Further objects and advantages of the present invention will appear hereinbelow.

### Summary of the Invention

In accordance with the present invention, the foregoing objects and advantages are readily obtained.

The present invention provides a securing/clamping system for use with platens of a molding machine, especially an injection molding machine.

In accordance with a first aspect of the present invention there is provided a clamping system for a molding machine, said clamping system comprising: a stationary platen for mounting a first mold half; a clamp block coupled to the stationary platen by a plurality of tie-bars, the clamp block having a bore and a piston; a movable platen for mounting a second mold half, said movable platen positioned between the stationary platen and said clamp block; means for reciprocating said movable platen between a mold open and a mold closed position, wherein the mold closed position allows, in use, contact of the first mold half against the second mold half to form a mold; a column having a first end coupled to the movable platen and a second end passable through the bore of the clamp block; and means for generating and applying, in use and in said mold closed position, a clamping force to said movable platen via cooperation of the column, the piston and the tie-bars; the clamping system characterized in that: the second end of the column has, adjacent thereto, rows of teeth integrally formed in the column, the rows of teeth partitioned into at least one band of teeth by at least one axial groove running through the rows of teeth; and the piston is housed in the bore of the clamp block, the piston having a central bore for receiving the second end of the column, the piston being rotatable and including integrally formed teeth positively engagable, upon rotation of the piston into a first position, with said at least one band of teeth of said column to permit, in use, transmission of said clamping force to said column, said teeth of said piston further alignable, upon rotation of the piston into a second position, within said at least one axial groove to allow movement of the column through the central bore of the piston.

In another aspect of the present invention there is provided a clamp block-piston combination for a three-platen injection molding machine in which a clamp block, in use, is couplable to a stationary platen through a plurality of tie-bars and said clamp block is further couplable, in use, via a column to a movable platen slideable between the stationary platen and the clamp block, the clamp block having a bore through which, in use, an end of the column remote from the movable platen is passable, said end of the column having adjacent thereto rows of teeth integrally formed in the column, the rows of teeth partitioned into at least one band of teeth by at least one axial groove running through the rows of teeth, the clamp block-piston combination comprising: a rotatable piston housed within the bore of the clamp block, the rotatable piston having a central bore through which, in use, said end of the column passes, the rotatable piston including integrally formed teeth directly positively engagable, in use and upon rotation of the piston into a first position, with said at least one band of teeth of said column to transmit clamping force to said column, said teeth of said piston further alignable, upon rotation of the piston into a second position, within said at least one axial groove to allow, in use, free movement of the column through the central bore of piston.

In a further aspect of the present invention there is provided a method of generating clamp force between platens during a molding cycle of a three-platen molding machine in which a clamp block is coupled to a stationary platen through a plurality of tie-bars and said clamp block is further coupled, via a column, to a movable platen movable between the stationary platen and the clamp block, the column having an end, remote from the movable platen, having adjacent thereto rows of teeth integrally formed in the column, the rows of teeth partitioned into at least one band of teeth by at least one axial groove running through the rows of teeth, the method comprising: moving the movable platen along the tie-bars towards the stationary platen, the movement causing said band of teeth of said column to move relative to and inside a central bore of a piston housed in a bore of the clamp block, the movement of the movable platen further causing the formation of a mold by urging a first mold half, supported in the movable platen, towards and into contact with a second mold half supported in the stationary platen; rotating the piston to a first position to cause intermeshing of teeth integrally-formed in a surface of the piston defining the central bore with said at least one band of teeth of said column; generating a mold clamp force by forcing the piston towards the stationary platen, the mold clamp force transmitted by direct positive engagement of the integrally-forrned teeth in the surface of the piston with said at least one band of teeth of said column, the mold clamp force realized by a force-path through the tie-bars; at the end of an injection cycle, removing the mold clamp force and applying a mold break force to the piston; rotating the piston to a second position to cause alignment of the integrally-formed teeth of the piston with said at least one axial groove to allow subsequent free movement of the column through both the central bore of piston and the bore of the clamp block.

Further features of the present invention will appear hereinbelow.

### Brief Description of the Drawings

The present invention will be more readily understood from a consideration of the following illustrative drawings, wherein:
Figure 1 is a section view of a clamp assembly mechanism of the present invention;
Figure 2 is a detailed section view of a locking nut of the present invention;
Figure 3 is a perspective view of a locking nut and bearing assembly of the present invention;

It is a still further object of the present invention to provide an injection molding machine clamp assembly-which occupies less floor space than conventional designs.

Further objects and advantages of the present invention will appear hereinbelow.

### SUMMARY OF THE INVENTION

In accordance with the present invention, the foregoing objects and advantages are readily obtained.

The present invention provides a securing/clamping system for use with platens of a molding machine, especially an injection molding machine. The system of the present invention includes a stationary platen having a first mold half affixed thereto and a movable platen having a second mold half affixed thereto, with the movable platen travelling along a plurality of tiebars. Means are provided for reciprocatingly moving the movable platen between a mold open and a mold closed position. The present invention includes means for applying a clamping force to the movable platen in the mold closed position comprising at least one and preferably a plurality of columns having a first end affixed to the movable platen and a second end spaced from the movable platen with a plurality of spaced teeth on the second end, a clamp piston adiacent the second end of the column, and lock means as lock nuts engaging the clamp piston operative to engage and disengage the circumferentially spaced teeth.

Further features of the present invention will appear hereinbelow.

### BRIEF DESCRIPTION OF THE DRAWINGS

The present invention will be more readily understood from a consideration of the following illustrative drawings, wherein:

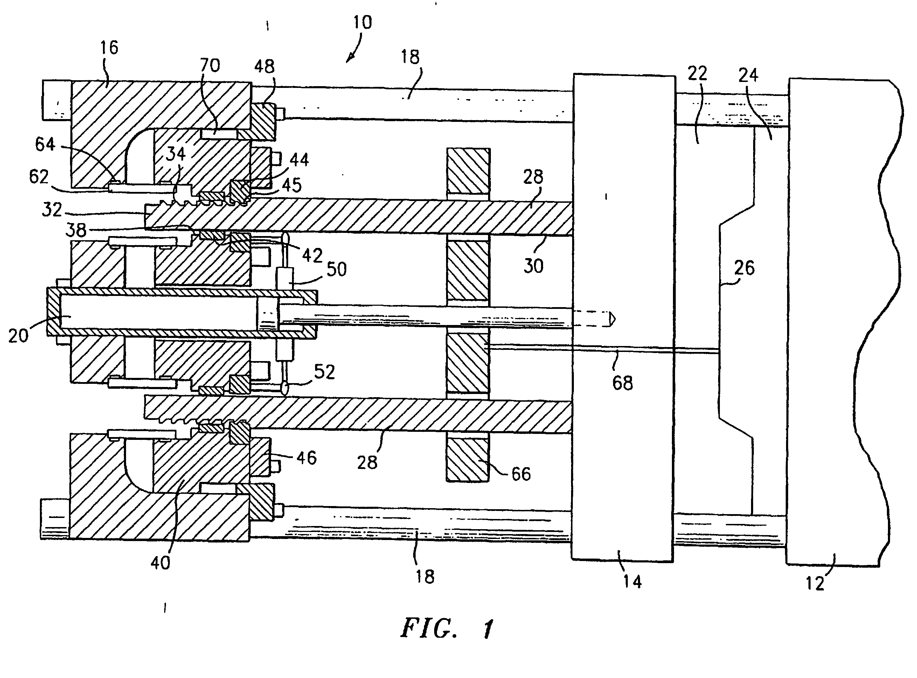

Figure 1 is a section view of a clamp mechanism of the present invention;

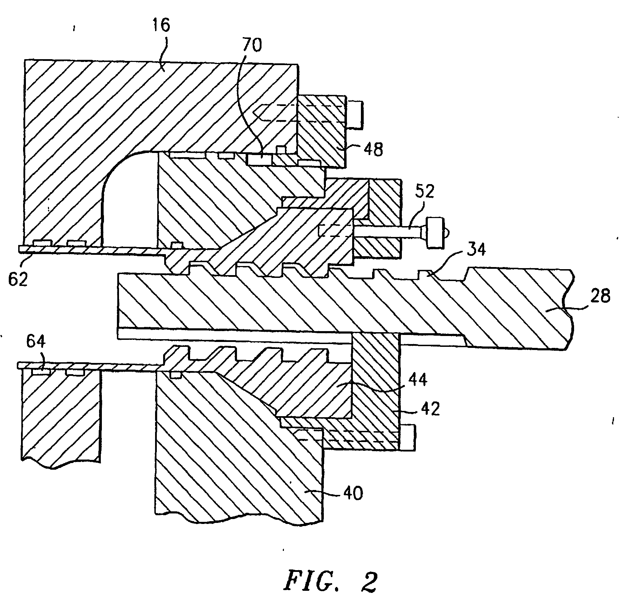

Figure 2 is a detailed section view of a locking nut of the present invention;

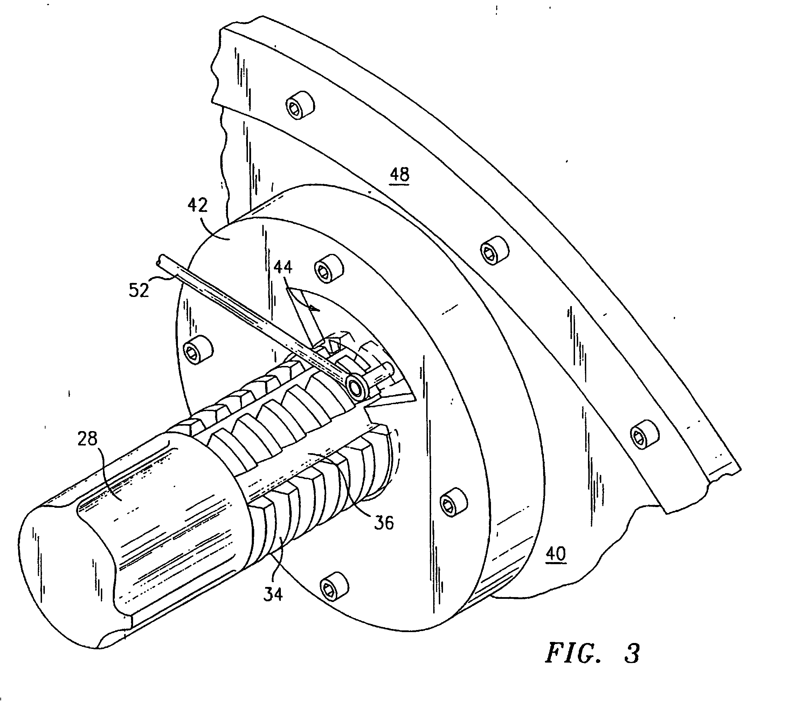

Figure 3 is a perspective view of a locking nut and bearing assembly of the present invention;

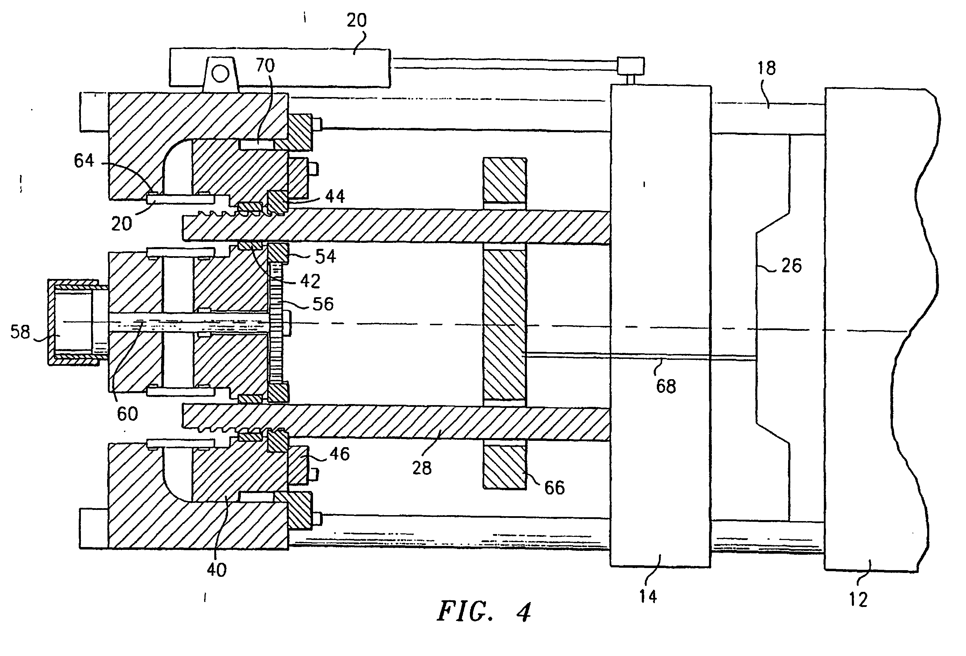

Figure 4 is a section view of an alternate embodiment of a clamp mechanism of the present invention;

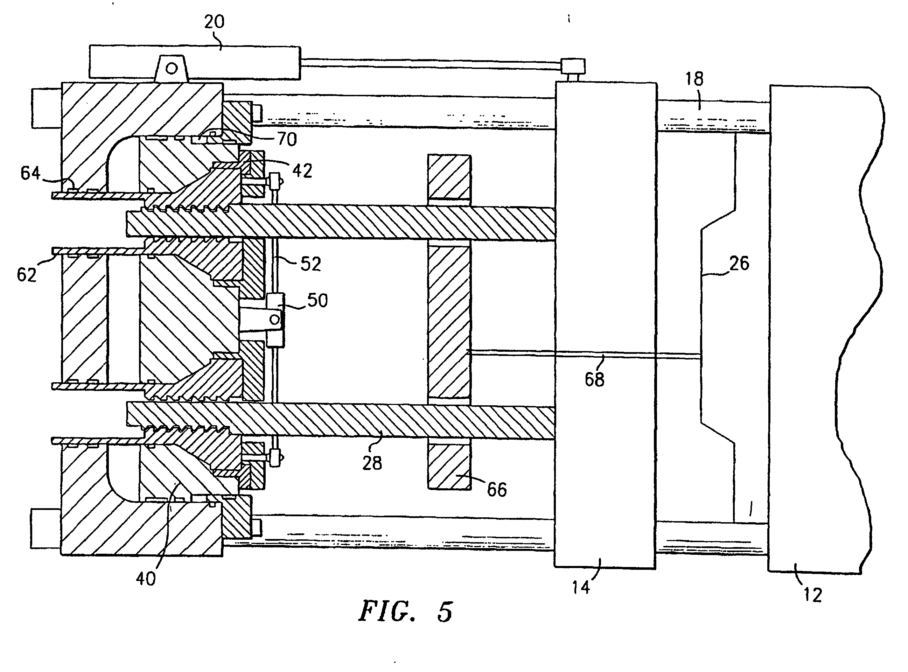

Figure 5 is a section view of an additional alternate embodiment of a clamp mechanism of the present invention; and

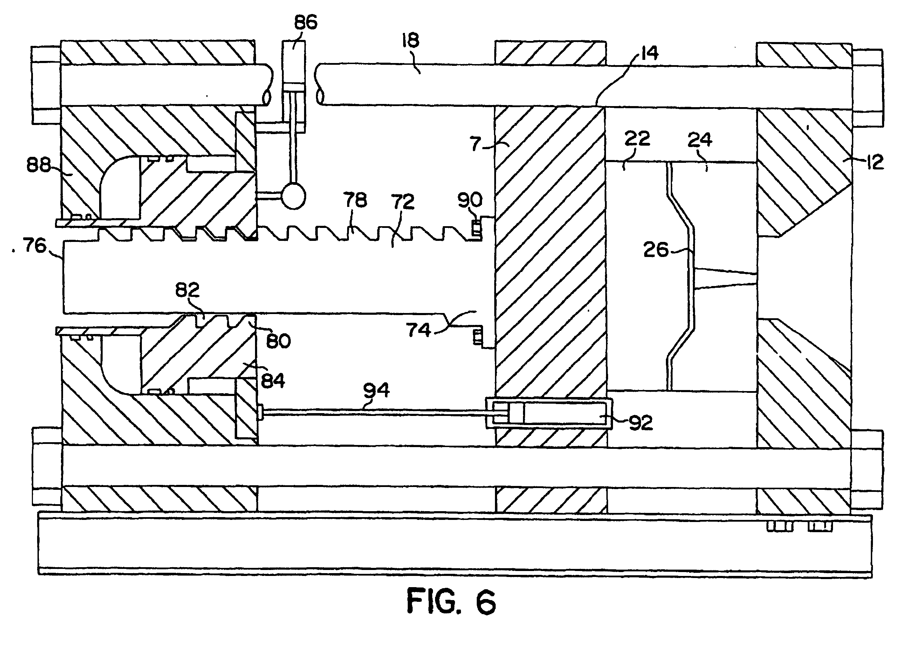

Figure 6 is a section view showing an alternate embodiment of a clamp mechanism of the present invention.

### DETAILED DESCRIPTION OF PREFERRED EMBODIMENTS

Referring to Figure 1, there is shown a high speed clamp mechanism 10 for an injection molding machine including a fixed platen 12, a movable platen 14 and a clamp block 16. Tiebars 18 connect fixed platen 12 and clamp block 16 while supporting the movable platen 14 which is free to slide along the tiebars. Generally four of the tiebars are used with only two being shown in Figure 1. Moving platen 14 is moved from a mold closed position shown in Figure 1 to a mold open position by cylinders 20 which may be supported by clamp block 16. One cylinder 20 is shown in Figure 1, but of course two or more of the cylinders may be used depending on requirements. The cylinders are actuated by a suitable motive means, not shown.

First mold half 22, such as a cavity half, is affixed to movable platen 14, and second mold half 24, such as a core half, is affixed to fixed platen 12, with the mold halves together forming mold 26 in the mold closed position. As indicated above, movable platen 14 moves on tiebars 18 between a mold open and mold closed position. Only one mold 26 is shown in Figure 1 for simplicity, but naturally a plurality of the molds can readily be provided.

Attached to the back side of movable platen 14, i.e., the movable platen side opposed to mold 26, is at least one column 28, generally a plurality of columns and preferably four columns, with two of the columns shown in Figure 1. Columns 28 have a first end 30 affixed to movable platen 14 and a second end 32 spaced from the movable platen. A plurality of teeth 34 are provided on second end 32. Circumferentially spaced between teeth 34 is at least one axial groove 36 and generally three or more of said grooves as clearly shown in Figure 3. Columns 28 pass through corresponding holes 38 in clamp piston 40, with the clamp piston 40 housed in clamp block 16 as shown in Figure 1. Bearing 42 in clamp piston 40 support the columns in holes 38.

Lock nuts 44 mounted on or with clamp piston 40 and carrying lock nut teeth 45 are rotatable to engage or disengage teeth 34 on column 28. The lock nuts may be any desired locking means and engage clamp piston 40 or are retained inside or on a face of clamp piston 40, as by bearings 42 as shown in Figures 2, 3 and 5, or by retaining caps 46 as shown in Figures 1 and 4. Clamp piston 40 is retained inside clamp block 16 by front cap 48 or other desired retaining means. Lock nuts 44 are caused to rotate by cylinder 50 via linkage 52. In an alternate embodiment shown in Figure 4, lock nuts 44 have gear teeth 54 cut in their external perimeter and these are engaged by a central gear 56 which is driven by motor 58 via drive shaft 60 that passes through clamp piston 40. The shaft 60 is splined so that it can move axially with respect to motor 58 when the clamp piston 40 carrying gear 56 moves within clamp block 16.

Sleeves 62, which can be an integral part of lock nut 44 as shown in Figures 2 and 5, or separate pieces as shown in Figures 1 and 4, use seals 64 to prevent fluid in the clamp cylinder from escaping during operation.

Ejector plate 66 carry ejector pins 68, is mounted on columns 28 to eject molded articles from mold 26 in a conventional manner.

In operation, movable platen 14 carrying first mold half 22 is moved to the mold closed position shown in Figure 1 to form mold 26 by cylinder(s) 20. Lock nuts 44 are rotated so that lock nut teeth 45 engage column teeth 34. Clamp piston 40 presses against lock nuts 44 and thereby against columns 28. This action clamps mold 26 between fixed platen 12 and movable platen 14. After injection and cooling of the plastic is complete the clamp is opened by first directing pressurized fluid against the "mold break" side of clamp piston 40 into cavity 70. This causes clamp piston 40 to pull lock nuts 44 away from the movable platen 14, they act on the back side of teeth 34 on column 28 and cause mold 26 to be forced open a short distance. Next, the lock nuts 44 are rotated out of engagement with columns 28, and cylinders 20 complete the opening of the mold. The molded parts are ejected from the mold 26 in a conventional manner and the clamp is ready to repeat the cycle.

The alternate embodiment of Figure 6 shows a single column 72 having a first end 74 affixed to movable platen 14 and a second end 76 spaced from the movable platen. Column 72 is provided with a plurality of teeth 78 adjacent second end 76 which may be along the length of column 72 as shown in Figure 6. Teeth 78 engage corresponding teeth 80 in bore 82 through single clamp piston 84 in locked relationship as shown in Figure 6. Clamp piston 84 is rotated to engage/disengage teeth 78 and 80 by cylinder 86 which may be mounted onto clamp block 88. Teeth 78 on column 72 are interrupted by slots as shown in the other embodiments, see slots 36 in Figure 3, so that in the disengaged position the teeth 80 in piston 84 are cleared in the slot permitting column 72 to move freely through bore 82 in piston 84. Column 72 is fixed to the back of movable platen 14, as by bolts 90, which is moved to open and close by cylinders 92 (one shown in Figure 6). Cylinder 92 is mounted to moving platen 14 and its rod 94 is mounted to clamp block 88. Alternatively, the cylinder may be mounted to the clamp block and the rod to the moving platen. The operation of the embodiment of Figure 6 is essentially as the previous embodiments. An advantage of the embodiment of Figure 6 is its reduced cost and greater simplicity and hence greater reliability.

The design of the clamping system of the present invention uses very little pressurized fluid to cause its motions for securing and clamping and consequently is a very energy efficient and fast acting clamp system.

The simplicity of the system of the present invention has the advantages of low construction cost, less maintenance and good operating reliability when compared to conventional systems. When compared to a conventional column blocking style of clamp design, the present design is smaller, lighter and less costly components are mounted on the clamp piston face. Also, the distance between the back face of the moving platen and the front face of the clamp block can be reduced without reducing platen opening stroke because the shutter plate assembly has been eliminated. Thus, the overall build length of the present clamp system is shorter and thereby reduces the footprint of the clamp which reduces the required floor space in the operating plant.

It is to be understood that the invention is not limited to the illustrations described and shown herein, which are deemed to be merely illustrative of the best modes of carrying out the invention, and which are susceptible of modification of form, size, arrangement of parts and details of operation. The invention rather is intended to encompass all such modifications which are within its scope as defined by the claims.

## Claims

1. A clamping system (10) for a molding machine, said clamping system (10) comprising:
a stationary platen (12) for mounting a first mold half (24);
a clamp block (16, 88) coupled to the stationary platen (12) by a plurality of tie-bars (18), the clamp block (16, 88) having a bore (38) and a piston (84);
a movable platen (14) for mounting a second mold half (22), said movable platen positioned between the stationary platen and said clamp block (16);
means (20, 92) for reciprocating said movable platen (14) between a mold open and a mold closed position, wherein the mold closed position allows, in use, contact of the first mold half (24) against the second mold half (22) to form a mold;
a column (72) having a first end coupled to the movable platen (14) and a second end (76) passable through the bore (38) of the clamp block (16, 88); and
means for generating and applying, in use and in said mold closed position, a clamping force to said movable platen (14) via cooperation of the column (72), the piston (84) and the tie-bars (18);
the clamping system (10) **characterized in that**:
the second end (76) of the column has, adjacent thereto, rows of teeth (78) integrally formed in the column (72), the rows of teeth (78) partitioned into at least one band of teeth by at least one axial groove (36) running through the rows of teeth (78); and
the piston is housed in the bore of the clamp block (16, 88), the piston having a central bore (38, 82) for receiving the second end of the column, the piston being rotatable and including integrally formed teeth (80) positively engagable, upon rotation of the piston (84) into a first position, with said at least one band of teeth of said column (72) to permit, in use, transmission of said clamping force to said column, said teeth (80) of said piston (84) further alignable, upon rotation of the piston (84) into a second position, within said at least one axial groove (36) to allow movement of the column (72) through the central bore (38, 82) of the piston (84).

2. The system according to claim 1, including at least three of said axial grooves in said rows of teeth (78) of said column (72).

3. The system according to claim 1 or 2, wherein said means for reciprocating includes at least one cylinder at least in part supported by said clamp block (16, 88).

4. The system according to claim 1 or 2, wherein said means for reciprocating includes at least one cylinder at least in part supported by said movable platen.

5. A clamp block-piston combination (16, 84, 88) for a three-platen injection molding machine in which a clamp block (16, 88), in use, is couplable to a stationary platen (12) through a plurality of tie-bars and said clamp block (16, 88) is further couplable, in use, via a column (72) to a movable platen (14) slideable between the stationary platen (12) and the clamp block (16, 88), the clamp block (16, 88) having a bore (38) through which, in use, an end (76) of the column (72) remote from the movable platen (14) is passable, said end (76) of the column having adjacent thereto rows of teeth (78) integrally formed in the column (72), the rows of teeth (78) partitioned into at least one band of teeth by at least one axial groove (36) running through the rows of teeth (78), the clamp block-piston combination (16, 84, 88) comprising:
a rotatable piston (84) housed within the bore (38) of the clamp block (16, 88), the rotatable piston (84) having a central bore (82) through which, in use, said end of the column (76) passes, the rotatable piston (84) including integrally formed teeth (80) directly positively engagable, in use and upon rotation of the piston (84) into a first position, with said at least one band of teeth of said column (72) to transmit clamping force to said column, said teeth (80) of said piston (84) further alignable, upon rotation of the piston (84) into a second position, within said at least one axial groove (36) to allow, in use, free movement of the column (72) through the central bore (82) of piston (84).

6. A method of generating clamp force between platens during a molding cycle of a three-platen molding machine (10) in which a clamp block (16, 88) is coupled to a stationary platen (12) through a plurality of tie-bars and said clamp block (16, 88) is further coupled, via a column (72), to a movable platen (14) movable between the stationary platen (12) and the clamp block (16, 88), the column having an end (76), remote from the movable platen (14), having adjacent thereto rows of teeth (78) integrally formed in the column (72), the rows of teeth (78) partitioned into at least one band of teeth by at least one axial groove (36) running through the rows of teeth (78), the method comprising:
moving the movable platen (14) along the tie-bars (18) towards the stationary platen (12), the movement causing said band of teeth of said column (72) to move relative to and inside a central bore (82) of a piston (84) housed in a bore (38) of the clamp block (16, 88), the movement of the movable platen further causing the formation of a mold by urging a first mold half (22), supported in the movable platen (14), towards and into contact with a second mold half (24) supported in the stationary platen (12);
rotating the piston (84) to a first position to cause intermeshing of teeth (80) integrally-formed in a surface of the piston (84) defining the central bore (82) with said at least one band of teeth of said column (72);
generating a mold clamp force by forcing the piston towards the stationary platen, the mold clamp force transmitted by direct positive engagement of the integrally-formed teeth in the surface of the piston with said at least one band of teeth of said column (72), the mold clamp force realized by a force-path through the tie-bars;
at the end of an injection cycle, removing the mold clamp force and applying a mold break force to the piston;
rotating the piston (84) to a second position to cause alignment of the integrally-formed teeth of the piston with said at least one axial groove (36) to allow subsequent free movement of the column (72) through both the central bore (82) of piston (84) and the bore (38) of the clamp block (16, 88).

## Patentansprüche

1. Klemmsystem (10) für eine Spritzgießmaschine, wobei das Klemmsystem (10) aufweist:
eine stationäre Platte (12) für die Halterung einer ersten Formhälfte (24);
einen Klemmblock (16, 88), der mit der stationären Platte (12) durch eine Vielzahl von Spannstangen (18) gekuppelt ist, wobei der Klemmblock (16, 88) eine Bohrung (38) und einen Kolben (84) aufweist;
eine bewegbare Platte (14) zur Halterung einer zweiten Formhälfte (22), wobei die bewegbare Platte zwischen der stationären Platte und dem Klemmblock (16) angeordnet ist;
Mittel (20, 92) zum Hin- und Herbewegen der bewegbaren Platte (14) zwischen einer Formoffenstellung und einer Formschließstellung, wobei die Formschließstellung im Betrieb gestattet, die erste Formhälfte (24) gegen die zweite Formhälfte (22) zur Bildung einer Form anzudrücken;
eine Säule (72) mit einem ersten Ende, das mit der bewegbaren Platte (14) gekuppelt ist, und einem zweiten Ende (76), das durch die Bohrung (38) des Klemmblockes (16, 88) hindurchbewegbar ist; und
Mittel, mit denen im Betrieb in der Formschließstellung eine Klemmkraft auf die bewegbare Platte (14) im Zusammenwirken mit der Säule (72), dem Kolben (84) und der Spannstangen (18) erzeugbar und aufbringbar ist;
wobei das Klemmsystem (10) **dadurch gekennzeichnet ist, daß**:
das zweite Ende (76) der Säule nahe demselben Reihen von Zähnen (78) aufweist, die mit der Säule (72) integral ausgebildet sind, wobei die Zahnreihen (78) durch zumindest eine durch die Zahnreihen (78) verlaufende Axialnut (36) in zumindest ein Band von Zähnen unterteilt sind; und
der Kolben in der Bohrung des Klemmblockes (16, 88) angeordnet ist, wobei der Kolben eine zentrale Bohrung (38, 82) zur Aufnahme des zweiten Endes der Säule aufweist, der Kolben drehbar und mit integral geformten Zähnen (80) versehen ist, die bei einer Drehung des Kolbens (84) in eine erste Position mit dem zumindest einen Band von Zähnen der Säule (72) formschlüssig in Eingriff versetzbar sind, so daß im Betrieb eine Übertragung der Klemmkraft auf die Säule möglich ist, wobei die Zähne (80) des Kolbens (84) ferner bei einer Drehung des Kolbens (84) in eine zweite Position innerhalb der zumindest einen Axialnut (36) ausgerichtet werden, um eine Bewegung der Säule (72) durch die zentrale Bohrung (38, 82) des Kolbens (84) zu gestatten.

2. System nach Anspruch 1, mit zumindest drei Reihen von Axialnuten in den Zahnreihen (78) der Säule (72).

3. System nach Anspruch 1 oder 2, bei welchem die Mittel zum Hin- und Herbewegen zumindest einen Zylinder in zumindest einem Teil aufweisen, der von dem Klemmblock (16, 88) abgestützt ist.

4. System nach Anspruch 1 oder 2, bei welchem die Mittel zum Hin- und Herbewegen zumindest einen Zylinder in zumindest einem Teil aufweisen, der von der bewegbaren Platte abgestützt ist.

5. Klemmblock-Kolbenkombination (16, 84, 88) für eine Dreiplatten-Spritzgießmaschine, bei welcher der Klemmblock (16, 88) im Betrieb mit einer stationären Platte (12) durch eine Vielzahl von Spannstangen kuppelbar ist, und der Klemmblock (16, 88) ferner im Betrieb über eine Säule (72) mit einer bewegbaren Platte (14) kuppelbar ist, die zwischen der stationären Platte (12) und dem Klemmblock (16, 88) gleitbeweglich ist, wobei der Klemmblock (16, 88) eine Bohrung (38) aufweist, durch welche im Betrieb ein von der bewegbaren Platte (14) entferntes Ende (76) der Säule (72) hindurchbewegbar ist, wobei das Ende (76) der Säule diesem benachbart eine Reihe von Zähnen (78) aufweist, die mit der Säule (72) integral ausgebildet sind, wobei die Zahnreihen (78) durch zumindest eine Axialnut (36) in zumindest ein Zahnband unterteilt sind, die durch die Zahnreihen (78) verläuft, wobei die Klemmblock-Kolbenkombination (16, 84, 88) aufweist:
einen drehbaren Kolben (84), der innerhalb der Bohrung (38) des Klemmblockes (16, 88) angeordnet ist, wobei der drehbare Kolben (84) mit einer zentralen Bohrung (82) versehen ist, durch welche im Betrieb das Ende der Säule (76) hindurchgeht, wobei der drehbare Kolben (84) integral geformte Zähne (80) aufweist, die im Betrieb bei einer Drehung des Kolbens (84) in eine erste Position mit dem zumindest einen Band von Zähnen der Säule (72) formschlüssig in Eingriff versetzbar sind, um die Klemmkraft auf die Säule zu übertragen, wobei die Zähne (80) des Kolbens (84) ferner bei einer Drehung des Kolbens (84) in eine zweite Position innerhalb der zumindest einen Axialnut (36) ausrichtbar sind, um im Betrieb eine freie Bewegung der Säule (72) durch die zentrale Bohrung (82) des Kolbens (84) zu gestatten.

6. Verfahren zum Erzeugen einer Klemmkraft zwischen den Platten einer Dreiplatten-Spritzgießmaschine (10) während eines Formungszyklus, bei welcher ein Klemmblock (16, 88) mit einer stationären Platte (12) über eine Vielzahl von Spannstangen gekuppelt wird, und der Klemmblock (18, 88) ferner über eine Säule (72) mit einer bewegbaren Platte (14) gekuppelt wird, die zwischen der stationären Platte (12) und dem Klemmblock (16, 88) bewegbar ist, wobei die Säule ein Ende (76) hat, das von der bewegbaren Platte (14) entfernt ist, und diesem Ende benachbart Reihen von Zähnen (78) aufweist, die mit der Säule (72) integral ausgebildet sind, wobei die Reihen von Zähnen (78) durch zumindest eine Axialnut (36) in zumindest ein Zahnband unterteilt sind, welche sich durch die Reihe von Zähnen (78) erstreckt, wobei das Verfahren aufweist:
Bewegen der bewegbaren Platte (14) entlang der Spannstangen (18) gegen die stationäre Platte (12), wobei die Bewegung bewirkt, daß sich das Zahnband der Säule (72) relativ zu und innerhalb einer zentralen Bohrung (82) eines Kolbens (84) bewegt, der in einer Bohrung (38) des Klemmblokkes (16, 88) angeordnet ist, wobei die Bewegung der bewegbaren Platte ferner die Bildung einer Form bewirkt, indem eine erste Formhälfte (22), die in der bewegbaren Platte (14) abgestützt ist, gegen und in Berührung mit einer zweiten Formhälfte (24) gebracht wird, die in der stationären Platte (12) abgestützt ist;
Drehen des Kolbens (84) in eine Position, um ein Kämmen von Zähnen (80), die integral auf einer Fläche des Kolbens (84) ausgebildet sind, welcher die zentrale Bohrung (82) definiert, mit dem zumindest einen Zahnband der Säule (72) zu bewirken;
Erzeugen einer Klemmkraft, indem der Kolben gegen die stationäre Platte gedrückt wird, wobei die Klemmkraft durch formschlüssigen Eingriff der auf der Oberfläche des Kolbens integral ausgebildeten Zähne mit dem zumindest einen Zahnband der Säule (72) erzeugt wird, wobei die Klemmkraft auf einem Kraftweg durch die Spannstangen aufgebracht wird;
Aufheben der Klemmkraft an dem Ende des Einspritzzyklus und Aufbringen einer Formaufbrechkraft auf den Kolben;
Drehen des Kolbens (84) in eine zweite Position, um eine Ausrichtung der integral geformten Zähne des Kolbens mit der zumindest einen Axialnut (36) zu bewirken, damit eine nachfolgende freie Bewegung der Säule (72) sowohl durch die zentrale Bohrung (82) des Kolbens (84) als auch durch die Bohrung (38) des Klemmblockes (16, 88) ermöglicht wird.

## Revendications

1. Système de serrage (10) pour une machine de moulage, ledit système de serrage (10) comprenant :
une table fixe (12) pour monter une première moitié de moule (24) ;
un bloc de serrage (16, 88) couplé à la table fixe (12) par une pluralité de barres de liaison (18), le bloc de serrage (16, 88) ayant un perçage (38) et un piston (84) ;
une table mobile (14) pour monter une seconde moitié de moule (22), ladite table mobile étant positionnée entre la table fixe et ledit bloc de serrage (16) ;
des moyens (20, 92) pour déplacer en va-et-vient ladite table mobile (14) entre une position d'ouverture de moule et une position de fermeture de moule, dans lesquelles la position de fermeture de moule permet, en utilisation, un contact de la première moitié de moule (24) contre la seconde moitié de moule (22) pour former un moule ;
une colonne (72) ayant une première extrémité couplée à la table mobile (14) est une seconde extrémité (76) susceptible de passer à travers le perçage (38) du bloc de serrage (16, 88) ; et
des moyens pour engendrer et appliquer, en utilisation et dans ladite position de fermeture de moule, une force de serrage sur ladite table mobile (14) via une coopération de la colonne (72), du piston (84) et des barres de liaison (18) ;
ledit système de serrage (10) étant **caractérisé en ce que** :
la seconde extrémité (76) de la colonne comporte, en position adjacente, des rangées de dents (78) formées en une seule pièce dans la colonne (72), les rangées de dents (78) étant subdivisées en au moins une bande de dents par au moins une gorge axiale (36) qui s'étend à travers les rangées de dents (78) ; et
le piston, logé dans le perçage du bloc de serrage (16, 88), comporte un perçage central (38, 82) pour recevoir la seconde extrémité de la colonne, le piston étant rotatif et incluant des dents (80) formées de manière intégrale et susceptibles d'être engagées positivement, lors de la rotation du piston (84) jusque dans une première position, avec ladite au moins une bande de dents de ladite colonne (72) pour permettre, en utilisation, la transmission de ladite force de serrage à ladite colonne, lesdites dents (80) dudit piston (84) pouvant être en outre alignées, lors de la rotation du piston (84) jusque dans une seconde position, à l'intérieur de ladite au moins une gorge axiale (36) pour permettre le mouvement de la colonne (72) à travers le perçage central (38, 82) du piston (84).

2. Système selon la revendication 1, incluant au moins trois gorges axiales dans lesdites rangées de dents (78) de ladite colonne (72).

3. Système selon l'une ou l'autre des revendications 1 et 2, dans lequel lesdits moyens pour le déplacement en va-et-vient incluent au moins un vérin supporté au moins en partie par ledit bloc de serrage (16, 88).

4. Système selon l'une ou l'autre des revendications 1 et 2, dans lequel lesdits moyens pour le déplacement en va-et-vient incluent au moins un vérin supporté au moins en partie par ladite table mobile.

5. Combinaison formée par un bloc de serrage et un piston (16, 84, 88) pour une machine de moulage par injection à trois tables dans laquelle un bloc de serrage (16, 88) est susceptible, en utilisation, d'être couplé à une table fixe (12) via une pluralité de barres de liaison et ledit bloc de serrage (16, 88) est en outre, en utilisation, susceptible d'être couplé via une colonne (72) à une table mobile (14) en coulissement entre la table fixe (12) et le bloc de serrage (16, 88), le bloc de serrage (16, 88) ayant un perçage (38) à travers lequel peut être passée, en utilisation, une extrémité (76) de la colonne (72) éloignée de la table mobile (14), ladite extrémité (76) de la colonne comportant en situation adjacente des rangées de dents (78) formées en une seule pièce dans la colonne (72), lesdites rangées de dents (78) étant subdivisées en au moins une bande de dents par au moins une gorge axiale (36) qui s'étend à travers les rangées de dents (78), la combinaison bloc de serrage/piston (16, 84, 88) comprenant :
un piston rotatif (84) logé à l'intérieur du perçage (38) du bloc de serrage (16, 88), ledit piston rotatif (84) ayant un perçage central (82) à travers lequel passe, en utilisation, ladite extrémité de la colonne (76), le piston rotatif (84) incluant des dents (80) formées de manière intégrale et susceptibles d'être engagées directement positivement, en utilisation et lors de la rotation du piston (84) jusque dans une première position, avec ladite au moins une bande de dents de ladite colonne (72) pour transmettre une force de serrage à ladite colonne, lesdites dents (80) dudit piston (84) étant en outre susceptibles d'être alignées, lors de la rotation du piston (84) jusque dans une seconde position, avec ladite au moins une gorge axiale (36) pour permettre, en utilisation, un mouvement libre de la colonne (72) à travers le perçage central (82) du piston (84).

6. Procédé pour engendrer une force de serrage entre des tables pendant un cycle de moulage d'une machine de moulage à trois tables (10) dans laquelle un bloc de serrage (16, 88) est couplé à une table fixe (12) au moyen d'une pluralité de barres de liaison et ledit bloc de serrage (16, 88) est en outre couplé, via une colonne (72), à une table mobile (14) mobile entre la table fixe (12) et le bloc de serrage (16, 88), la colonne ayant une extrémité (76), éloignée de la table mobile (14) présentant en position adjacente à cette extrémité des rangées de dents (78) formées de manière intégrale dans la colonne (72), les rangées de dents (78) étant subdivisées en au moins une bande de dents par au moins une gorge axiale (36) qui s'étend à travers les rangées de dents (78), le procédé comprenant les opérations consistant à :
déplacer la table mobile (14) le long des barres de liaison (18) vers la table fixe (12), le mouvement amenant ladite bande de dents de ladite colonne (72) à se déplacer par rapport à et à l'intérieur d'un perçage central (82) d'un piston (84) logé dans un perçage (38) du bloc de serrage (16, 88), le mouvement de la table mobile provoquant en outre la formation d'un moule en repoussant une première moitié de moule (22), portée par la table mobile (14), en direction d'une seconde moitié de moule (24) portée par la table fixe (12) et jusqu'en contact avec cette seconde moitié de moule ;
faire tourner le piston (84) jusqu'à une première position pour entraîner l'engrènement des dents (80) formées de manière intégrale dans une surface du piston (84) qui définit le perçage central (82) avec ladite au moins une bande de dents de ladite colonne (72) ;
engendrer une force de serrage de moule en forçant le piston vers la table fixe, la force de serrage de moule étant transmise par engagement positif direct des dents formées de manière intégrale dans la surface du piston avec ladite au moins une bande de dents de ladite colonne (72), la force de serrage de moule étant appliquée selon des barres de liaison; à la fin d'un cycle d'injection, supprimer la force de serrage de moule et appliquer une force d'ouverture de moule au piston ; et
faire tourner le piston (84) jusqu'à une seconde position pour entraîner un alignement des dents formées de manière intégrale sur le piston avec ladite au moins une gorge axiale (36) et permettre un mouvement successif libre de la colonne (72) à la fois à travers le perçage central (82) du piston (84) et à travers le perçage (38) du bloc de serrage (16, 88).
